# EUROPÄISCHE PATENTSCHRIFT

(11) **EP 3 727 861 B1**
(45) Veröffentlichungstag und Bekanntmachung des Hinweises auf die Patenterteilung: **08.09.2021**
(21) Anmeldenummer: 18814944.7
(22) Anmeldetag: 13.12.2018
(51) Int. Cl.: B33Y 70/00, B33Y 10/00, B29C 64/153, B29C 64/165, B22F 3/105, C08L 75/04, B29K 75/00, B29K 105/00, C08G 18/48, C08G 18/76, C08G 18/22, C08G 18/42, C08G 18/24, B22F 10/20

(54) **PULVERBASIERTES ADDITIVES FERTIGUNGSVERFAHREN**
POWDER-BASED ADDITIVE PRODUCTION METHOD
PROCÉDÉ DE FABRICATION D'ADDITIFS À BASE DE POUDRE

(30) Priorität: 20.12.2017 EP 17209194
(43) Veröffentlichungstag der Anmeldung: 28.10.2020
(73) Patentinhaber: Covestro Deutschland AG, 51373 Leverkusen (DE)
(72) Erfinder: ACHTEN, Dirk, 51375 Leverkusen (DE); BÜSGEN, Thomas, 51377 Leverkusen (DE); KESSLER, Michael, 50969 Köln (DE); REICHERT, Peter, 41541 Dormagen (DE); METTMANN, Bettina, 41540 Dormagen (DE)
(74) Vertreter: Levpat
(86) Internationale Anmeldenummer: PCT/EP2018/084659
(87) Internationale Veröffentlichungsnummer: WO 2019/121274

(56) Entgegenhaltungen:
- WO-A1-2015/109143
- ACHIM FRICK ET AL: "Microstructure and thermomechanical properties relationship of segmented thermoplastic polyurethane (TPU)", AIP CONFERENCE PROCEEDINGS, 1. Januar 2014 (2014-01-01), Seiten 520-525, XP055486884, NEW YORK, US ISSN: 0094-243X, DOI: 10.1063/1.4873835

## Beschreibung

Die vorliegende Erfindung betrifft ein additives Fertigungsverfahren unter Einsatz von Partikeln mit einem bestimmten thermoplastischen Polyurethan. Sie betrifft weiterhin einen mittels solcher Partikel hergestellten Gegenstand.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen oder Bohren. Bei letztgenannten Verfahren wird ein Gegenstand so bearbeitet, dass er durch Wegnahme von Material seine Endgeometrie erhält.

Additive Fertigungsverfahren nutzen unterschiedliche Materialien und Prozesstechniken, um Gegenstände schichtweise aufzubauen. Beim sogenannten Fused Deposition Modeling (FDM) beispielsweise wird ein thermoplastischer Kunststoffdraht verflüssigt und mit Hilfe einer Düse schichtweise auf einer beweglichen Bauplattform abgelegt. Beim Erstarren entsteht ein fester Gegenstand. Die Steuerung der Düse und der Bauplattform erfolgt auf der Grundlage einer CAD-Zeichnung des Gegenstands. Ist die Geometrie dieses Gegenstands komplex, zum Beispiel mit geometrischen Hinterschneidungen, müssen zusätzlich Stützmaterialien mitgedruckt und nach Fertigstellung des Gegenstands wieder entfernt werden.

Daneben existieren additive Fertigungsverfahren, welche thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als beim zuvor beschrieben FDM-Verfahren. Zudem können verschiedene Gegenstände eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzern verwendet. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren (EP 1648686) erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen.

Auf Basis der Polymere, die heute in pulverbasierten additiven Fertigungsverfahren vorwiegend eingesetzt werden, entstehen Gegenstände, deren mechanische Eigenschaften sich grundlegend von der Charakteristik der Materialien unterscheiden können, wie sie in anderen kunststoffverarbeitenden Verfahren, wie dem Spritzgießen, bekannt sind. Bei der Verarbeitung durch die additiven Fertigungsverfahren verlieren die eingesetzten thermoplastischen Materialien ihre spezifische Charakteristik.

Polyamid 12 (PA12) ist der derzeit am meisten eingesetzte Werkstoff für pulverbasierte additive Fertigungsverfahren, wie z.B. dem Lasersintern. PA12 zeichnet sich durch hohe Festigkeit und Zähigkeit aus, wenn es im Spritzguss oder durch Extrusion verarbeitet wird. Ein handelsübliches PA12 zeigt beispielsweise nach dem Spritzgießen eine Bruchdehnung von mehr als 200%. PA12-Gegenstände, die mit dem Lasersinterverfahren hergestellt sind, zeigen hingegen Bruchdehnungen um 15%. Das Bauteil ist spröde und kann daher nicht mehr als typisches PA12-Bauteil angesehen werden. Gleiches gilt für Polypropylen (PP), welches als Pulver für das Lasersintern angeboten wird. Auch dieses Material versprödet und verliert damit die PP-typischen zäh-elastischen Eigenschaften. Gründe hierfür sind in der Morphologie der Polymere zu finden.

Während des Aufschmelzvorgangs mittels Laser oder IR und insbesondere beim Abkühlen entsteht eine unregelmäßige innere Struktur der so genannten teilkristallinen Polymere (beispielsweise PA12 und PP). Die innere Struktur (Morphologie) teilkristalliner Polymere ist teilweise durch hohe Ordnung gekennzeichnet. Ein gewisser Anteil der Polymerketten bildet beim Abkühlen kristalline, eng gepackte Strukturen aus. Während des Aufschmelzens und Abkühlens wachsen diese Kristallite unregelmäßig an den Grenzen der nicht komplett aufgeschmolzenen Partikel sowie an den ehemaligen Korngrenzen der Pulverpartikel und an im Pulver enthaltenen Additiven. Die Unregelmäßigkeit der so entstehenden Morphologie begünstigt unter mechanischer Belastung das Entstehen von Rissen. Die beim pulverbasierten additiven Verfahren nicht zu vermeidende Restporosität fördert das Risswachstum.

Spröde Eigenschaften der so entstandenen Bauteile sind das Resultat. Zur Erläuterung dieser Effekte wird auf European Polymer Journal 48 (2012), Seiten 1611-1621 verwiesen. Auch die im Lasersintern eingesetzten elastischen Polymere auf Basis von Block-Copolymeren zeigen ein für die eingesetzten Polymere untypisches Eigenschaftsprofil, wenn sie als Pulver mit additiven Fertigungsverfahren zu Gegenständen verarbeitet werden. Beim Lasersintern kommen heute thermoplastische Elastomere (TPE) zum Einsatz. Gegenstände, die aus den heute verfügbaren TPEs hergestellt werden, weisen nach dem Erstarren eine hohe Restporosität auf und die ursprüngliche Festigkeit des TPE-Werkstoffs ist nicht im daraus gefertigten Gegenstand messbar. In der Praxis werden diese porösen Bauteile daher nachträglich mit flüssigen, aushärtenden Polymeren infiltriert, um das erforderliche Eigenschaftsprofil einzustellen. Die Festigkeit und Dehnung bleibt trotz dieser zusätzlichen Maßnahme auf einem niedrigen Niveau. Der zusätzliche Verfahrensaufwand führt - neben den immer noch unzureichenden mechanischen Eigenschaften - zu einer schlechten Wirtschaftlichkeit dieser Materialien.

Bei Lasersinter-Verfahren unter Einsatz von Polymerpartikeln werden diese in der Regel in einem abgeschlossenen Volumen oder Kammer verarbeitet, damit die Partikel in einer erwärmten Atmosphäre verarbeitet werden können. Auf diese Weise kann die Temperaturdifferenz, die zum Sintern der Partikel durch Einwirkung des Lasers überwunden werden muss, verringert werden. Generell lässt sich feststellen, dass die thermischen Eigenschaften des Polymers die möglichen Verarbeitungstemperaturen in Lasersinter-Verfahren beeinflussen. Daher wurden im Stand der Technik vielfältige Lösungen für solche Polymere und deren Verarbeitungsverfahren vorgeschlagen.

WO 03/106146 A1 offenbart Partikel zur Verwendung beim Selektiven Laser Sintern (SLS) enthaltend einen Kern aus mindestens einem ersten Material, eine mindestens teilweise Beschichtung des Kerns mit einem zweiten Material, wobei das zweite Material eine niedrigere Erweichungstemperatur aufweist als das erste Material. Die Erweichungstemperatur des zweiten Materials beträgt weniger als circa 70 °C. Dieses Dokument offenbart weiterhin ein Verfahren zur Herstellung eines dreidimensionalen Gegenstandes mittels SLS aufweisend die Schritte: Auftragen einer Schicht aus Partikeln auf eine Zielfläche; Bestrahlen eines ausgewählten Teils der Schicht, entsprechend einem Querschnitt des Gegenstandes, mit einem Energiestrahl, so dass die Partikel im ausgewählten Teil verbunden werden; Wiederholen der Schritte des Auftragens und des Bestrahlens für eine Mehrzahl von Schichten, so dass sich die verbundenen Teile der benachbarten Schichten verbinden, um den Gegenstand zu bilden. Es werden Partikel verwendet werden, die mindestens ein Material enthalten, dessen Erweichungstemperatur weniger als circa 70 °C beträgt.

WO 2015/197515 A1 beschreibt ein thermoplastisches pulverförmiges Mittel enthaltend 0,02 bis 0,5 Gew.-%, bezogen auf die Gesamtmenge an Mittel, Fließmittel und pulverförmiges thermoplastisches Polyurethan, wobei mindestens 90 Gew.-% des Mittels einen Teilchendurchmesser von kleiner 0,25 mm aufweist, wobei das thermoplastische Polyurethan erhältlich ist aus der Reaktion der Komponenten a) mindestens ein organisches Diisocyanat b) mindestens eine mit gegenüber Isocyanatgruppen reaktiven Gruppen aufweisenden Verbindung mit einem zahlenmittleren Molekulargewicht (Mₙ) von 500 g/mol bis 6000 g/mol und einer zahlenmittleren Funktionalität der Gesamtheit der Komponenten unter b) von 1,8 bis 2,5 c) mindestens ein Kettenverlängerungsmittel mit einem Molekulargewicht (Mₙ) von 60 - 450 g/mol und einer zahlenmittleren Funktionalität der Gesamtheit der Kettenverlängerungsmittel unter c) von 1,8 bis 2,5 in Gegenwart von d) gegebenenfalls Katalysatoren e) gegebenenfalls Hilfs- und/oder Zusatzmitteln f) gegebenenfalls einen oder mehrere Kettenabbrecher.

Das thermoplastische Polyurethan gemäß WO 2015/197515 A1 weist einen Schmelzbereich (DSC, Differential Scanning Calorimetry; zweite Aufheizung mit Aufheizrate 5 K/min) von 20 bis 170° C und eine Shore A Härte gemäß DIN ISO 7619-1 von 50 bis 95 auf, hat bei einer Temperatur T eine Schmelzvolumenrate (melt volume rate (MVR)) gemäß ISO 1133 von 5 bis 15 cm³/10 min und eine Änderung des MVR bei einer Erhöhung dieser Temperatur T um 20 °C von kleiner 90 cm³/10 min auf. Der Einsatzzweck ist die Herstellung von Gegenständen in pulverbasierten additiven Fertigungsverfahren.

US 2005/0080191 A1 betrifft ein Pulversystem zur Verwendung in festen Freiform-Herstellungsverfahren, umfassend wenigstens ein Polymer mit reaktiven Eigenschaften und verschmelzbaren Eigenschaften, wobei das wenigstens eine Polymer ausgewählt ist, um mit einem flüssigen Bindemittel zu reagieren und bei einer Temperatur oberhalb des Schmelzpunkts oder der Glasübergangstemperatur des wenigstens einen Polymers verschmelzbar ist. Das wenigstens eine Polymer kann wenigstens ein reaktives Polymer und wenigstens ein verschmelzbares Polymer umfassen und das wenigstens eine schmelzbare Polymer kann einen Schmelzpunkt oder eine Glasübergangstemperatur im Bereich von ca. 50 °C bis ca. 250 °C aufweisen.

WO 2015/109143 A1 offenbart Systeme und Verfahren für die Freiform-Herstellung von Festkörpern, insbesondere Lasersinterverfahren, sowie diverse mit den Verfahren erhaltene Artikel. Die Systeme und Verfahren verwenden bestimmte thermoplastische Polyurethane, welche abgeleitet sind von (a) einer Polyisocyanat-Komponente, (b) einer Polyol-Komponente und (c) einer optionalen Kettenverlängerungs-Komponente, wobei das erhaltene thermoplastische Polyurethanpolymer eine Schmelzenthalpie von wenigstens 5.5 J/g, eine Kristallisationstemperatur Tc von über 70 °C und ein Δ(Tm:Tc) von 20 Grad bis 75 Grad aufweist, wobei Δ(Tm:Tc) die Differenz zwischen Tm (Schmelztemperatur) und Tc ist.

Im Stand der Technik existiert weiterhin der Bedarf an pulverbasierten additiven Herstellungsverfahren, in denen Polymere mit hohen mechanischen Festigkeiten, einer hohen Bauteilzähigkeit und einer hohen Wärmeformbeständigkeit eingesetzt werden können und in denen die erhaltenen Bauteile homogene Materialeigenschaften aufweisen.

Erfindungsgemäß vorgeschlagen wird ein Verfahren zur Herstellung eines Gegenstandes, umfassend die Schritte:
- Auftragen einer Schicht aus Partikeln auf eine Zielfläche;
- Einwirken von Energie auf einen ausgewählten Teil der Schicht, entsprechend einem Querschnitt des Gegenstandes, in einer Kammer, so dass die Partikel im ausgewählten Teil verbunden werden;
- Wiederholen der Schritte des Auftragens und des Einwirkens von Energie für eine Mehrzahl von Schichten, so dass sich die verbundenen Teile der benachbarten Schichten verbinden, um den Gegenstand zu bilden;

wobei wenigstens ein Teil der Partikel ein schmelzbares Polymer aufweist;
wobei das schmelzbare Polymer ein thermoplastisches Polyurethanpolymer umfasst, welches
eine Fließtemperatur (Kreuzungspunkt von E' und E" in der DMA) von ≥ 80 °C bis ≤ 180 °C und
eine Shore A-Härte gemäß DIN ISO 7619-1 von ≥ 50 Shore A und ≤ 85 Shore A aufweist und welches
bei einer Temperatur T eine Schmelzvolumenrate (melt volume rate (MVR) gemäß ISO 1133 von 5 bis 15 cm³/10 min und
eine Änderung des MVR bei einer Erhöhung dieser Temperatur T um 20 °C von ≥ 90 cm³/10 min aufweist.

Im erfindungsgemäßen Verfahren wird ein Gegenstand schichtweise aufgebaut. Ist die Anzahl der Wiederholungen für Auftragen und Bestrahlen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 2 bis ≤ 20 Wiederholungen für Auftragen und Bestrahlen durchgeführt werden.

Es ist vorgesehen, dass wenigstens ein Teil der Partikel ein schmelzbares Polymer aufweist. Vorzugsweise weisen alle eingesetzten Partikel im Verfahren ein schmelzbares Polymer auf. Es ist ferner bevorzugt, dass mindestens 90 Gewichts-% der Partikel einen Teilchendurchmesser von ≤ 0.1 mm, bevorzugt ≤ 0.5 mm, besonders bevorzugt ≤ 0.2 mm aufweisen. Die Partikel mit dem schmelzbaren Polymer können beispielsweise homogen aufgebaut sein, so dass keine weiteren schmelzbaren Polymere in den Partikeln vorliegen.

Die Energiequelle zum Verbinden der Teilchen kann elektromagnetische Energie wie zum Beispiel UV- bis IR-Licht sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel der Partikel untereinander bewirken.

Neben dem schmelzbaren Polymer können die Partikel noch weitere Additive wie Füllstoffe, Stabilisatoren und dergleichen, aber auch weitere Polymere, enthalten. Der Gesamtgehalt an Additiven in den Partikeln kann beispielsweise ≥ 0,1 Gewichts-% bis ≤ 50 Gewichts-%, bevorzugt ≥ 0,5 Gewichts-% bis ≤ 30 Gewichts-%, besonders bevorzugt ≥ 1 Gewichts-% bis ≤ 10 Gewichts%, betragen.

Das thermoplastische Polyurethanpulver weist ein steiles Aufschmelzverhalten auf. Das Aufschmelzverhalten wird über die Änderung des MVR (melt volume rate) gemäß ISO 1133 bei 5 Minuten Vorheizzeit und 10 kg in Abhängigkeit von der Temperatur bestimmt. Als "steil" gilt ein Aufschmelzverhalten dann, wenn der MVR bei einer Ausgangstemperatur Tx einen Ausgangswert von 5 bis 15 cm³/10 min aufweist und durch Temperaturerhöhung um 20 °C auf Tx+20 um ≥ 90 cm³/10 min steigt.

Die Temperatur T, welche als Referenzpunkt für die Bestimmung des Aufschmelzverhaltens dient, ist vorzugsweise in einem Bereich von ≥ 80 °C bis ≤ 190 °C, mehr bevorzugt ≥ 90 °C bis ≤ 180 °C und besonders bevorzugt ≥ 100 °C bis ≤ 170 °C.

Das schmelzbare Polymer weist eine Fließtemperatur von ≥ 80 °C bis ≤ 190 °C, vorzugsweise von ≥ 90 °C bis ≤ 180 °C und mehr bevorzugt von ≥ 100 °C bis ≤ 170 °C auf. Die Fließtemperatur wird in einer DMA (dynamisch-mechanischen Analyse) als Kreuzungspunkt der Kurven für den Speichermodul E' und den Verlustmodul E" definiert.

Sofern nicht anders angegeben, beziehen sich alle Angaben zur Messung mittels DMA (dynamisch-mechanische Analyse) auf die Messung an spritzgegossenen Probenplatten mit den Maßen 50 mm*10 mm*1 mm. Die Messparameter für die DMA-Messungen sind eine Frequenz von 1 Hz und einer Aufheizrate von 2 °C/min über ein Temperaturintervall von -150 °C bis 250 °C angelehnt an DIN-EN-ISO 6721-4.

Das schmelzbare Polymer weist eine Shore-Härte (DIN ISO 7619-1) von ≥ 50 Shore A bis ≤ 85 Shore A auf. Bevorzugt sind Shore-Härten von ≥ 60A bis ≤ 80A, mehr bevorzugt ≥ 65 A bis ≤ 75A.

Die Wahl des thermoplastischen Polyurethanpolymers im erfindungsgemäßen Verfahren hat die Folge, dass zum ersten Mal niedrigschmelzende, scharfaufschmelzende elastische TPU mit guten dynamisch-mechanischen Eigenschaften insbesondere im Bereich 0 °C bis 100 °C im Lasersinterprozess verfügbar werden. Solche Eigenschaften sind besonders gefragt im Bereich technischer Artikel im Bereich des Transports und bei Sport- und Orthopädie-Artikeln wie zum Beispiel Schuhen und Einlagen. Dass solche Produkte auf Basis thermoplastischer Polyurethane in einem Pulversinterprozess verarbeitbar sind, war bisher unbekannt.

Die guten dynamisch-mechanischen Eigenschaften äußern sich besonders in einer weitgehend konstanten Dämpfung im Bereich von > 20°C bis < 80°C, bevorzugt > 10°C bis < 90°C und ganz besonders bevorzugt im Bereich von > 0°C bis < 100°C.

Überraschenderweise wurde weiterhin gefunden, das das erfindungsgemäß zu verwendende TPU-Pulver in einer herkömmlichen Pulversinteranlage bei Bauraumtemperaturen < 120 °C oder < 110 °C, bevorzugt < 100 °C, besonders bevorzugt < 90 °C und ganz besonders bevorzugt < 80 °C zu Produkten mit hoher Detailgenauigkeit und guten mechanischen Eigenschaften führt.

Vorzugsweise ist das schmelzbare Polymer ein Polyurethan, das zumindest anteilsmäßig erhältlich ist aus der Reaktion von aromatischen und/oder aliphatischen Polyisocyanaten mit geeigneten (Poly)alkoholen und/oder (Poly)aminen oder deren Abmischungen. Bevorzugt werden zumindest anteilsmäßig als (Poly)alkohole solche aus der Gruppe bestehend aus: lineare Polyesterpolyole, Polyetherpolyole, Polycarbonatpolyole, Polyacrylatpolyole oder einer Kombination aus mindestens zwei hiervon eingesetzt. In einer bevorzugten Ausführungsform tragen diese (Poly)alkohole oder (Poly)amine endständige Alkohol- und/oder Amin-Funktionalitäten. In einer weiteren bevorzugten Ausführungsform haben die (Poly)alkohole und oder (Poly)amine ein Molekulargewicht von 52 bis 10000 g/mol. Bevorzugt haben diese (Poly)alkohole oder (Poly)amine als Einsatzstoffe einen Schmelzpunkt im Bereich von 5 bis 150 °C. Bevorzugte Polyisocyanate, die zumindest anteilmäßig zur Herstellung der schmelzbaren Polyurethane verwendet werden können, sind TDI, MDI, HDI, PDI, H12MDI, IPDI, TODI, XDI, NDI und Decandiisocyanat. Besonders bevorzugte Polyisocyanate sind HDI, PDI, H12MDI, MDI und TDI.

Gegebenenfalls können bei der Reaktion zum Polyurethan weiterhin Diole des Molekulargewichtsbereichs von ≥ 62 bis ≤ 600 g/mol als Kettenverlängerungsmittel eingesetzt werden.

Die Polyisocyanatkomponente kann ein symmetrisches Polyisocyanat und/oder ein nichtsymmetrisches Polyisocyanat umfassen. Beispiele für symmetrische Polyisocyanate sind 4,4'-MDI und HDI.

Bei nicht-symmetrischen Polyisocyanaten ist die sterische Umgebung einer NCO-Gruppe im Molekül von der sterischen Umgebung einer weiteren NCO Gruppe verschieden. Es reagiert dann eine Isocyanatgruppe schneller mit gegenüber Isocyanaten reaktiven Gruppen, beispielsweise OH-Gruppen, während die verbleibende Isocyanatgruppe weniger reaktiv ist. Eine Folge des nicht-symmetrischen Aufbaus des Polyisocyanats ist, dass die mit diesen Polyisocyanaten aufgebauten Polyurethane auch eine weniger gerade Struktur aufweisen.

Beispiele geeigneter nicht-symmetrischer Polyisocyanate sind ausgewählt aus der Gruppe bestehend aus: 2,2,4-Trimethyl-hexamethylendiisocyanat, Ethylethylendiisocyanat, nicht-symmetrische Isomere des Dicyclohexylmethandiisocyanat (H₁₂-MDI), nicht-symmetrische Isomere des 1,4-Diisocyanatocyclohexan, nicht-symmetrische Isomere des 1,3-Diisocyanatocyclohexan, nicht-symmetrische Isomere des 1,2-Diisocyanatocyclohexan, nicht-symmetrische Isomere des 1,3-Diisocyanatocyclopentan, nicht-symmetrische Isomere des 1,2-Diisocyanatocyclopentan, nicht-symmetrische Isomere des 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(3-isocyanatoprop-1-yl)-1,3,3-trimethyl-cyclohexan, 5-lsocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, 2,4'-Diphenylmethandiisocyanat (MDI), 2,4- und 2,6-Toluylendiisocyanat (TDI), Derivate der aufgeführten Diisocyanate, insbesondere dimerisierte oder trimerisierte Typen, oder einer Kombination aus mindestens zwei hiervon.

Bevorzugt sind 4,4'-MDI oder eine Mischung enthaltend IPDI und HDI als Polyisocyanatkomponente.

Ausführungsformen und weitere Aspekte der Erfindung werden nachfolgend geschildert. Sie können beliebig miteinander kombiniert werden, sofern sich aus dem Kontext nicht eindeutig das Gegenteil ergibt.

In einer bevorzugten Ausführungsform des erfindungsgemäßen Verfahrens umfasst das Einwirken von Energie auf einen ausgewählten Teil der Schicht, entsprechend einem Querschnitt des Gegenstandes, so dass die Partikel im ausgewählten Teil verbunden werden, den folgenden Schritt:
- Bestrahlen eines ausgewählten Teils der Schicht, entsprechend einem Querschnitt des Gegenstandes, mit einem Energiestrahl in der Kammer, so dass die Partikel im ausgewählten Teil verbunden werden.

Diese Verfahrensform kann als selektives Sinterverfahren, insbesondere als selektives Lasersinterverfahren (SLS) angesehen werden. Der Energiestrahl zum Verbinden der Teilchen kann ein Strahl elektromagnetischer Energie wie zum Beispiel ein "Lichtstrahl" von UV- bis IR-Licht sein. Vorzugsweise ist der Energiestrahl ein Laserstrahl, besonders bevorzugt mit einer Wellenlänge zwischen 600 nm und 15 µm. Der Laser kann als Halbleiterlaser oder als Gaslaser ausgeführt sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel der Partikel untereinander bewirken.

In einer weiteren bevorzugten Ausführungsform des erfindungsgemäßen Verfahrens umfasst das Einwirken von Energie auf einen ausgewählten Teil der Schicht, entsprechend einem Querschnitt des Gegenstandes, so dass die Partikel im ausgewählten Teil verbunden werden, die folgenden Schritte:
- Auftragen einer Flüssigkeit auf einen ausgewählten Teil der Schicht, entsprechend einem Querschnitt des Gegenstandes, wobei die Flüssigkeit die Absorption von Energie in den von ihr kontaktierten Bereichen der Schicht relativ zu den nicht von ihr kontaktierten Bereichen erhöht;
- Bestrahlen der Schicht in der Kammer, so dass die Partikel in von der Flüssigkeit kontaktierten Bereichen der Schicht miteinander verbunden werden und die Partikel in nicht von der Flüssigkeit kontaktierten Bereichen der Schicht nicht miteinander verbunden werden.

Bei dieser Ausführungsform kann beispielsweise eine Flüssigkeit enthaltend einen IR-Absorber mittels Inkjet-Verfahren auf die Schicht aufgetragen werden. Das Bestrahlen der Schicht führt zu einer selektiven Erwärmung derjenigen Partikel, welche in Kontakt mit der Flüssigkeit samt IR-Absorber stehen. Auf diese Weise kann ein Verbinden der Partikel erreicht werden.

Die Energiequelle zum selektiven Verbinden der Partikel ist insbesondere ein UV- bis IR-Strahler. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel der Partikel untereinander bewirken.

In einer weiteren bevorzugten Ausführungsform des erfindungsgemäßen Verfahrens werden die aufgetragenen Partikel zumindest zeitweise beheizt oder gekühlt. Geeignete Kühlmethoden sind unter anderem die Kühlung einer oder mehrerer Wände einer Bauraumkammer oder das Bereitstellen von kaltem, inerten Gas innerhalb der Kammer. Es ist alternativ möglich, dass das Innere der Kammer zumindest zeitweise nicht beheizt wird. Dann wird die durch das Einwirken von Energie eingetragene thermische Energie zur Aufrechterhaltung der gewünschten Temperatur in der Kammer ausgenutzt. Die Bauraumtemperatur während des Sinterprozesses kann beispielsweise < 120°C, bevorzugt < 100°C, besonders bevorzugt < 90°C und ganz besonders bevorzugt < 80°C betragen.

In einer weiteren bevorzugten Ausführungsform des erfindungsgemäßen Verfahrens hat das thermoplastische Polyurethanpolymer eine Glasübergangstemperatur von ≤ 0 °C (Maximum von E" in DMA). Bevorzugt ist eine Glasübergangstemperatur von ≤ -10 °C, mehr bevorzugt ≤ -20 °C, besonders bevorzugt ≤ -30 °C.

In einer weiteren bevorzugten Ausführungsform des erfindungsgemäßen Verfahrens beträgt in dem thermoplastischen Polyurethanpolymer der Speichermodul E', bestimmt mittels dynamischmechanischer Analyse im Zugversuch bei 1 Hz und 2 °C/min bei 80 °C ≥ 30% (bevorzugt ≥ 35%, mehr bevorzugt ≥ 40%) des Speichermoduls E' bei 0 °C.

In einer weiteren bevorzugten Ausführungsform des erfindungsgemäßen Verfahrens weist das thermoplastische Polyurethanpolymer die folgenden Eigenschaften auf:
- die Glasübergangstemperatur (Maximum von E" in DMA) ist ≤ 0 °C (bevorzugt ≤ -10 °C, mehr bevorzugt ≤ -20 °C, besonders bevorzugt ≤ -30 °C);
- bei einer Temperatur T_{E", max} weist das Polymer ein Maximum des Verlustmoduls E" (DMA) auf;
- bei einer Temperatur T₁ = T_{E", max} - 10 °C weist das Polymer einen ersten Speichermodul E'₁ (DMA) auf;
- bei einer Temperatur T₂ = T₁ + 50 °C (bevorzugt 40 °C, mehr bevorzugt 30 °C, besonders bevorzugt 20 °C) weist das Polymer einen zweiten Speichermodul E'₂ (DMA) auf;
- E'₂ beträgt ≥ 0,3% bis ≤ 2% (bevorzugt ≥ 0,4% bis ≤ 1, 6%, mehr bevorzugt ≥ 0,5% bis ≤ 1,5%) von E'₁.

In einer weiteren bevorzugten Ausführungsform des erfindungsgemäßen Verfahrens weist wenigstens ein Teil der Partikel das schmelzbare Polymer sowie ein weiteres Polymer und/oder anorganische Partikel auf. Dann werden sogenannte Co-Pulver eingesetzt. Das weitere Polymer kann mit dem schmelzbaren Polymer eine oder mehrere Phasen bilden. Es kann durch Einwirkung des Energiestrahls in der Kammer ganz oder teilweise aufgeschmolzen werden oder auch im festen Zustand verbleiben. Beispiele für anorganische Partikel sind Füllstoffe wie Kieselsäure, Kalksteinmehl, natürliche, gemahlene Kreiden (Calciumcarbonate oder Calcium-Magnesiumcarbonate), Schwerspat, Talk, Glimmer, Tone oder gegebenenfalls auch Ruß. Der Gesamtanteil des weiteren Polymers und/oder der anorganischen Partikel kann beispielsweise ≥ 5 Gewichts-% bis ≤ 50 Gewichts-%, bezogen auf das Gesamtgewicht der Partikel, betragen.

In einer weiteren bevorzugten Ausführungsform des erfindungsgemäßen Verfahrens wird der gebildete Gegenstand einer Nachbehandlung unterzogen, die ausgewählt ist aus der Gruppe bestehend aus: mechanisches Glätten der Oberfläche, gezieltes lokales Erwärmen, Erwärmen des gesamten Gegenstands, gezieltes lokales Abkühlen, Abkühlen des gesamten Gegenstands, Kontaktieren des Gegenstands mit Wasserdampf, Kontaktieren des Gegenstands mit dem Dampf eines organischen Lösungsmittels, Bestrahlen des Gegenstands mit elektromagnetischer Strahlung, Immersion des Gegenstands in ein Flüssigkeitsbad oder einer Kombination aus mindestens zwei hiervon. Solche Nachbehandlungen dienen vor allem der Verbesserung der Oberflächengüte des Gegenstands.

In einer weiteren bevorzugten Ausführungsform des erfindungsgemäßen Verfahrens sind die Partikel nach dem Schritt des Auftragens einer Schicht der Partikel auf die Zielfläche wenigstens teilweise in einer flüssigen Phase suspendiert. Die flüssige Phase kann in einem späteren Stadium des Verfahrens entfernt werden. Nach dem Auftragen einer Partikelschicht kann so gezielt ein Bereich der Partikelschicht mit einer Tinte versehen werden, welche in Kombination mit dem Energiestrahl zu einer Verbindung der Partikel untereinander führt. Somit werden Elemente des High Speed Sintering (HSS)-Verfahrens übernommen.

Ein weiterer Gegenstand der Erfindung betrifft partikelförmiges Mittel enthaltend thermoplastisches Polyurethan, wobei das thermoplastische Polyurethan erhältlich ist aus der Reaktion der Komponenten
a) mindestens ein organisches Diisocyanat,
b) mindestens eine mit gegenüber Isocyanatgruppen reaktiven Gruppen aufweisenden Verbindung mit einem zahlenmittleren Molekulargewicht (Mn) von 500 g/mol bis 6000 g/mol und einer zahlenmittleren Funktionalität der Gesamtheit der Komponenten unter b) von 1,8 bis 2,5,
c) mindestens ein Kettenverlängerungsmittel mit einem Molekulargewicht (Mn) von 60 bis 450 g/mol und einer zahlenmittleren Funktionalität der Gesamtheit der Kettenverlängerungsmittel unter c) von 1,8 bis 2,5,
in Gegenwart von
d) gegebenenfalls Katalysatoren,
e) gegebenenfalls Hilfs- und/oder Zusatzmitteln,
f) gegebenenfalls einen oder mehrere Kettenabbrecher,
wobei das thermoplastische Polyurethan eine Fließtemperatur (Kreuzungspunkt von E' und E" in der DMA) von ≥ 80 °C bis ≤ 180 °C und eine Shore A-Härte gemäß DIN ISO 7619-1 von ≥ 50 Shore A und ≤ 85 Shore A aufweist und welches bei einer Temperatur T eine Schmelzvolumenrate (melt volume rate (MVR)) gemäß ISO 1133 von ≥ 5 bis ≤ 15 cm³/10 min und eine Änderung des MVR bei einer Erhöhung dieser Temperatur T um 20 °C von ≥ 90 cm³/10 min aufweist,
zur Herstellung von Gegenständen in pulverbasierten additiven Fertigungsverfahren, insbesondere dem zuvor beschriebenen Verfahren.

Bevorzugt weist das thermoplastische pulverförmige Mittel 0,02 bis 0,5 Gew.-%, mehr bevorzugt 0,05 bis 0,4 Gew.-%, besonders bevorzugt 0,1 bis 0,3 Gew.-% Fließmittel, bezogen auf die Gesamtmenge an thermoplastischem pulverförmigen Mittel auf. Üblicherweise ist das Fließmittel eine anorganische gepulverte Substanz, wobei mindestens 90 Gew.-% des Fließmittels einen Teilchendurchmesser von kleiner 25 µm (gemessen mittels Laserbeugung) haben und die Substanz vorzugsweise ausgewählt ist aus der Gruppe bestehend aus hydratisierten Siliciumdioxiden, hydrophobierten pyrogenen Kieselsäuren, amorphem Aluminiumoxid, glasartigen Siliciumdioxiden, glasartigen Phosphaten, glasartigen Boraten, glasartigen Oxiden, Titandioxid, Talk, Glimmer, pyrogenen Siliciumdioxiden, Kaolin, Attapulgit, Calciumsilicaten, Aluminiumoxid und Magnesiumsilicaten.

Weiterhin bevorzugt weisen mindestens 90 Gew.-% des Mittels einen Teilchendurchmesser von ≤ 0,25 mm, bevorzugt von ≤ 0,2 mm, mehr bevorzugt von ≤ 0,15 mm auf, gemessen mittels Laserbeugung.

Die Komponenten, wie die Komponenten d) bis f) können aus sämtlichen dem Fachmann im Zusammenhang mit thermoplastischen Polyurethanen gängige Komponenten ausgewählt sein. Bevorzugt sind diese Komponenten solche, wie in WO 2015/197515 A1 hierfür beschrieben und werden auch bevorzugt in Mengen wie dort beschrieben zur Herstellung des thermoplastischen Polyurethans verwendet.

Das thermoplastische Polyurethan enthaltend in dem thermoplastischen pulverförmigen Mittel kann bevorzugt sämtliche Eigenschaften und Bestandteile aufweisen, wie zuvor für das thermoplastische Polyurethan in Zusammenhang mit dem erfindungsgemäßen Verfahren beschrieben.

Die Erfindung betrifft weiterhin einen durch das erfindungsgemäße Verfahren hergestellten Gegenstand.

In einer bevorzugten Ausführungsform des Gegenstands macht im Gegenstand vorliegendes gesintertes thermoplastisches Polyurethan eine Phasenseparation in Hartphasen und Weichphasen aufweist und der Anteil der Weichphasen, bestimmt mittels Rasterkraftmikroskopie, ≥ 40% (vorzugsweise ≥ 50, mehr bevorzugt ≥ 60%) der Summe aus Hartphasen und Weichphasen aus.

In einer weiteren bevorzugten Ausführungsform des Gegenstands weist im Gegenstand vorliegendes gesintertes thermoplastisches Polyurethan einen tan delta-Wert (nach dynamisch-mechanische Analyse) auf, welcher im Temperaturbereich zwischen 0 °C und 100 °C um ≤ 0,2 (bevorzugt ≤ 0,15 und mehr bevorzugt ≤ 0,1) schwankt. Der tan delta-Wert wird vorzugsweise an spritzgegossenen Prüfkörpern aus dem betreffenden Polyurethan bestimmt.

### Beispiele

Die vorliegende Erfindung wird anhand der nachfolgenden Beispiele näher erläutert, ohne jedoch darauf beschränkt zu sein. Gewichtsprozentangaben beziehen sich auf die eingesetzte Gesamtmenge an reaktiven organischen Bestandteilen (Alkohole, Amine, Wasser, Isocyanate).

Erfindungsgemäß verwendbare TPU und TPU für Vergleichsbeispiele wurden nach zwei gängigen Verfahrensmethoden hergestellt: dem Präpolymerverfahren und dem One-Shot/Statikmischer-Verfahren.

Beim Präpolymerverfahren wird das Polyol oder Polyolgemisch auf 180 bis 210 °C vorgeheizt, mit einem Teil des Isocyanats vorgelegt und bei Temperaturen von 200 bis 240 °C umgesetzt. Die Drehzahl des hierbei eingesetzten Zweischneckenextruders beträgt ca. 270 bis 290 U/min. Durch diese vorgelagerte Teilreaktion erhält man ein lineares, leicht vorverlängertes Präpolymer, das im weiteren Verlauf des Extruders mit Restisocyanat und Kettenverlängerer abreagiert. Dieses Verfahren ist beispielhaft in EP-A 747 409 beschrieben.

Beim One-Shot/Statikmischer Verfahren werden alle Comonomere über einen Statikmischer oder ein anderes geeignetes Mischaggregat bei hohen Temperaturen (über 250 °C) innerhalb kurzer Zeit (unter 20 s) homogenisiert und anschließend über einen Zweischneckenextruder bei Temperaturen von 90 bis 180°C und einer Drehzahl von 260-280 U/min ausreagiert und ausgetragen. Dieses Verfahren ist beispielhaft in der Anmeldung DE 19924089 beschrieben.

Das thermisch mechanische Verhalten der erhaltenen TPU wurde an spritzgegossenen Probenplatten mit den Maßen 50 mm*10 mm*1 mm ermittelt. Die Messparameter für die DMA-Messungen waren Frequenz von 1 Hz und einer Aufheizrate von 2 °C/min über ein Temperaturintervall von -150 °C bis 250 °C angelehnt an DIN-EN-ISO 6721-4.

### Beispiel 1:

Das TPU (thermoplastisches Polyurethan) wurde aus 1 Mol eines Polyesterdiolgemisches bestehend aus einem Polyesterdiol mit einem zahlenmittleren Molekulargewicht von ca. 2000 g/mol auf Basis von Adipinsäure, Hexandiol und Neopentylglycol sowie einem Polyesterdiol mit einem zahlenmittleren Molekulargewicht von ca. 2250 g/mol auf Basis von Adipinsäure und Butandiol (im Verhältnis 2:1) und 1,30 Mol 2,2'-(1,4-Phenylendioxy)diethanol, 2,30 Mol technisches 4,4'-Diphenylmethandiisocyanat (MDI) mit >98 Gew.-% 4,4'-MDI, 0,07 Gew.-% Irganox® 1010 (Pentaerythritoltetrakis(3-(3,5-di-tert-butyl-4-hydroxyphenyl)propionat) von BASF SE) und 78 ppm Zinndioctoat sowie 1,1 Gew.-% Loxamid 3324 (N,N'-Ethylen-bis-stearylamid) nach dem Prepolymerverfahren hergestellt.

Es wurde ein Polyurethan mit einer Glasübergangstemperatur (Maximum E" in der DMA) von -38 °C, einer Shore A-Härte (ISO 868) gemessen an einem spritzgegossenen Probenkörper von 81 Shore A und einer Fließtemperatur (Kreuzungspunkt von E' und E" in der DMA) von 169 °C erhalten.

### Beispiel 2:

Das TPU (thermoplastisches Polyurethan) wurde aus 1 Mol Polyetherdiol mit einem zahlenmittleren Molekulargewicht von ca. 2000 g/mol auf Basis von Propylenoxid sowie ca. 2,81 Mol 1,4-Butandiol, ca. 0,28 Mol 1,6-Hexandiol, ca. 4,09 Mol technisches 4,4'-Diphenylmethandiisocyanat (MDI) mit >98 Gew.-% 4,4'-MDI, 0,3 Gew.-% Irganox® 1010 (Pentaerythritoltetrakis(3-(3,5-di-tert-butyl-4-hydroxyphenyl)propionat) von BASF SE), 1,0 Gew.-% Loxamid 3324 (N,N'-Ethylen-bis-stearylamid) und 30 ppm Ti(IV)-Katalysator nach dem Prepolymerverfahren hergestellt.

Es wurde ein Polyurethan mit einer Glasübergangstemperatur (Maximum E" in der DMA) von -38 °C, einer Shore A-Härte (ISO 868) gemessen an einem spritzgegossenen Probenkörper von 80 Shore A und einer Fließtemperatur (Kreuzungspunkt von E' und E" in der DMA) von 153 °C erhalten.

### Beispiel 3:

Das TPU (thermoplastisches Polyurethan) wurde aus 1 Mol Polyetherdiol mit einem zahlenmittleren Molekulargewicht von ca. 2000 g/mol auf Basis von Propylenoxid sowie ca. 1,74 Mol 1,4-Butandiol, ca. 0,14 Mol 1,6-Hexandiol, ca. 2,88 Mol technisches 4,4'-Diphenylmethandiisocyanat (MDI) mit >98 Gew.-% 4,4'-MDI, 0,4 Gew.-% Irganox® 1010 (Pentaerythritoltetrakis(3-(3,5-di-tert-butyl-4-hydroxyphenyl)propionat) von BASF SE), 1,0 Gew.-% Loxamid 3324 (N,N'-Ethylen-bis-stearylamid) und 20 ppm Ti(IV)-Katalysator nach dem Prepolymerverfahren hergestellt.

Es wurde ein Polyurethan mit einer Glasübergangstemperatur (Maximum E" in der DMA) von -39 °C, einer Shore A-Härte (ISO 868) gemessen an einem spritzgegossenen Probenkörper von 65 Shore A und einer Fließtemperatur (Kreuzungspunkt von E' und E" in der DMA) von 129 °C erhalten.

### Vergleichsbeispiel V1:

Das TPU (thermoplastisches Polyurethan) wurde aus 1 Mol Polyesterdiol mit einem zahlenmittleren Molekulargewicht von ca. 900 g/mol auf Basis von ca. 56,7 Gew.-% Adipinsäure und ca. 43,3 Gew.-% 1,4-Butandiol sowie ca. 1,45 Mol 1,4-Butandiol, ca. 0,22 Mol 1,6-Hexandiol, ca. 2,67 Mol technisches 4,4'-Diphenylmethandiisocyanat (MDI) mit >98 Gew.-% 4,4'-MDI, 0,05 Gew.-% Irganox® 1010 (Pentaerythritoltetrakis(3-(3,5-di-tert-butyl-4-hydroxyphenyl)propionat) von BASF SE), 1,1 Gew.-% Licowax® E (Montansäureester von Clariant) und 250 ppm Zinndioctoat nach dem Statikmischer-Extruder-Verfahren hergestellt.

Es wurde ein Polyurethan mit einer Glasübergangstemperatur (Maximum E" in der DMA) von -24 °C, einer Shore A-Härte (ISO 868) gemessen an einem spritzgegossenen Probenkörper von 92 Shore A und einer Fließtemperatur (Kreuzungspunkt von E' und E" in der DMA) von 142 °C erhalten.

### Vergleichsbeispiel V2:

Das TPU (thermoplastisches Polyurethan) wurde aus 1 Mol Polyesterdiolgemisch bestehend aus einem Polyesterdiol mit einem zahlenmittleren Molekulargewicht von ca. 900 g/mol auf Basis von Adipinsäure und 1,4-Butandiol sowie einem Polyesterdiol mit einem zahlenmittleren Molekulargewicht von ca. 2250 g/mol auf Basis von Adipinsäure und 1,4-Butandiol (Verhältnis 5:95) sowie ca. 2,53 Mol 1,4-Butandiol, ca. 3,53 Mol technisches 4,4'-Diphenylmethandiisocyanat (MDI) mit >98 Gew.-% 4,4'-MDI, 0,07 Gew.-% Irganox® 1010 (Pentaerythritoltetrakis(3-(3,5-ditert-butyl-4-hydroxyphenyl)propionat) von BASF SE), 0,25 Gew.-% Loxamid 3324 (N,N'-Ethylenbis-stearylamid) und 106 ppm Zinndioctoat nach dem bekannten Prepolymerverfahren hergestellt.

Es wurde ein Polyurethan mit einer Glasübergangstemperatur (Maximum E" in der DMA) von -40 °C, einer Shore A-Härte (ISO 868) gemessen an einem spritzgegossenen Probenkörper von 86 Shore A und einer Fließtemperatur (Kreuzungspunkt von E' und E" in der DMA) von 160 °C erhalten.

### Vergleichsbeispiel V3:

Das TPU (thermoplastisches Polyurethan) wurde aus 1 Mol Polyesterdiol mit einem zahlenmittleren Molekulargewicht von ca. 2055 g/mol sowie 4,85 Mol 2,2'-(1,4-Phenylendioxy)diethanol, 5,85 Mol technisches 4,4'-Diphenylmethandiisocyanat (MDI) mit >98 Gew.-% 4,4'-MDI, 0,03 Gew.-% Irganox® 1010 (Pentaerythritoltetrakis(3-(3,5-di-tert-butyl-4-hydroxyphenyl)propionat) von BASF SE) und 100 ppm Zinndioctoat sowie 0,5 Gew.-% Loxamid 3324 (N,N'-Ethylen-bis-stearylamid) nach dem Prepolymerverfahren hergestellt.

Es wurde ein Polyurethan mit einer Glasübergangstemperatur (Maximum E" in der DMA) von -13 °C, einer Shore A-Härte (ISO 868) gemessen an einem spritzgegossenen Probenkörper von 97 Shore A und einer Fließtemperatur (Kreuzungspunkt von E' und E" in der DMA) von 205 °C erhalten.

Die nachfolgende Tabelle führt weitere Analysendaten auf:

| Beispiel Nr. | T_{MVR}[°C] 5-15 cm³/10 min | MVR_{T+20°C} [cm³/10 min] | Tan δ-Schwankung (0 °C bis 100 °C) | E'₂/E'₁ | E' (80 °C)/ E' (0 °C) |
|---|---|---|---|---|---|
| 1 | 200 | > 100 | 0,0947 | 1,4% | 61% |
| 2 | 195 | > 100 | 0,1996 | 1,6% | 30% |
| 3 | 180 | > 100 | 0,1732 | 0,5% | 42% |
| V1 | 160 | ca.69 | 0,1088 | 8% | 14% |
| V2 | 185 | ca.54 | 0,1119 | 2,4% | 28% |
| V3 | 237 | > 100 | 0,074 | 25% | 11% |

Die Angaben E'₁ und E'₂ sind wie folgt definiert:
- bei einer Temperatur T_{E", max} weist das Polymer ein Maximum des Verlustmoduls E" (dynamisch-mechanische Analyse) auf
- bei einer Temperatur T₁ = T_{E", max} - 10 °C weist das Polymer einen ersten Speichermodul E'₁ (dynamisch-mechanische Analyse) auf
- bei einer Temperatur T₂ = T₁ + 50 °C weist das Polymer einen zweiten Speichermodul E'₂ (dynamisch-mechanische Analyse) auf

Den gemäß Beispielen 1, 2 und 3 sowie Vergleichsbeispielen V1, V2 und V3 hergestellten TPU wurden 0,5-2,0 Gew.-%, bezogen auf TPU, hydrophober pyrogener Kieselsäure als Fließmittel (Aerosil® R972 von Evonik) zugegeben, die Mischung wurde mechanisch unter Tiefkälte (kryogener Zerkleinerung) in einer Stiftmühle zu Pulver verarbeitet und anschließend durch eine Siebmaschine klassifiziert. 90 Gew.-% der erhaltenen Partikel hatten einen Teilchendurchmesser von kleiner 140 µm (gemessen mittels Laserbeugung (HELOS - Partikelgrößenanalyse)).

Anschließend wurden S2-Prüfstäbe in einem Pulversinterverfahren mit den nachfolgenden Parametern hergestellt:

| Beispiel Nr. | Bauraumtemp. [°C] | Laserleistung [W] | Schichtdicke [mm] | Anzahl der Sintervorgänge pro Schicht | Bauteil |
|---|---|---|---|---|---|
| 2 | 110 | 60 | 0,15 | 2 | Entspricht |
| 3 | 110 | 60 | 0,15 | 2 | Entspricht |

## Patentansprüche

1. Verfahren zur Herstellung eines Gegenstandes, umfassend die Schritte:
- Auftragen einer Schicht aus Partikeln auf eine Zielfläche;
- Einwirken von Energie auf einen ausgewählten Teil der Schicht, entsprechend einem Querschnitt des Gegenstandes, in einer Kammer, so dass die Partikel im ausgewählten Teil verbunden werden;
- Wiederholen der Schritte des Auftragens und des Einwirkens von Energie für eine Mehrzahl von Schichten, so dass sich die verbundenen Teile der benachbarten Schichten verbinden, um den Gegenstand zu bilden;
wobei wenigstens ein Teil der Partikel ein schmelzbares Polymer aufweist;
**dadurch gekennzeichnet, dass**
das schmelzbare Polymer ein thermoplastisches Polyurethanpolymer umfasst, welches eine Fließtemperatur (Kreuzungspunkt von E' und E" in der DMA) von ≥ 80 °C bis ≤ 180 °C und
eine Shore A-Härte gemäß DIN ISO 7619-1 von ≥ 50 Shore A und ≤ 85 Shore A aufweist und welches
bei einer Temperatur T eine Schmelzvolumenrate (melt volume rate (MVR)) gemäß ISO 1133 von ≥ 5 bis ≤ 15 cm³/10 min und
eine Änderung des MVR bei einer Erhöhung dieser Temperatur T um 20 °C von ≥ 90 cm³/10 min aufweist.

2. Verfahren gemäß Anspruch 1, **dadurch gekennzeichnet, dass** das Einwirken von Energie auf einen ausgewählten Teil der Schicht, entsprechend einem Querschnitt des Gegenstandes, so dass die Partikel im ausgewählten Teil verbunden werden, den folgenden Schritt umfasst:
- Bestrahlen eines ausgewählten Teils der Schicht, entsprechend einem Querschnitt des Gegenstandes, mit einem Energiestrahl, so dass die Partikel im ausgewählten Teil verbunden werden.

3. Verfahren gemäß Anspruch 1, **dadurch gekennzeichnet, dass** das Einwirken von Energie auf einen ausgewählten Teil der Schicht, entsprechend einem Querschnitt des Gegenstandes, so dass die Partikel im ausgewählten Teil verbunden werden, die folgenden Schritte umfasst:
- Auftragen einer Flüssigkeit auf einen ausgewählten Teil der Schicht, entsprechend einem Querschnitt des Gegenstandes, wobei die Flüssigkeit die Absorption von Energie in den von ihr kontaktierten Bereichen der Schicht relativ zu den nicht von ihr kontaktierten Bereichen erhöht;
- Bestrahlen der Schicht, so dass die Partikel in von der Flüssigkeit kontaktierten Bereichen der Schicht miteinander verbunden werden und die Partikel in nicht von der Flüssigkeit kontaktierten Bereichen der Schicht nicht miteinander verbunden werden.

4. Verfahren gemäß einem der vorhergehenden Ansprüche, **dadurch gekennzeichnet, dass** die aufgetragenen Partikel zumindest zeitweise beheizt oder gekühlt werden.

5. Verfahren gemäß einem der vorhergehenden Ansprüche, **dadurch gekennzeichnet, dass** das thermoplastische Polyurethanpolymer eine Glasübergangstemperatur von ≤ 0 °C (Maximum von E" in DMA) hat.

6. Verfahren gemäß einem der vorhergehenden Ansprüche, **dadurch gekennzeichnet, dass** in dem thermoplastischen Polyurethanpolymer der Speichermodul E', bestimmt mittels dynamischmechanischer Analyse im Zugversuch bei 1 Hz und 2 °C/min bei 80 °C ≥ 30% des Speichermoduls E' bei 0 °C beträgt.

7. Verfahren gemäß einem der vorhergehenden Ansprüche, **dadurch gekennzeichnet, dass** das thermoplastische Polyurethanpolymer die folgenden Eigenschaften aufweist:
- die Glasübergangstemperatur (Maximum von E" in DMA) ist ≤ 0 °C;
- bei einer Temperatur T_{E", max} weist das Polymer ein Maximum des Verlustmoduls E" (DMA) auf;
- bei einer Temperatur T₁ = T_{E", max} - 10 °C weist das Polymer einen ersten Speichermodul E'₁ (DMA) auf;
- bei einer Temperatur T₂ = T₁ + 50 °C weist das Polymer einen zweiten Speichermodul E'₂ (DMA) auf;
- E'₂ beträgt ≥ 0,3% bis ≤ 2% von E'₁.

8. Verfahren gemäß einem der vorhergehenden Ansprüche, **dadurch gekennzeichnet, dass** wenigstens ein Teil der Partikel das schmelzbare Polymer sowie ein weiteres Polymer und/oder anorganische Partikel aufweist.

9. Verfahren gemäß einem der vorhergehenden Ansprüche, **dadurch gekennzeichnet, dass** der gebildete Gegenstand einer Nachbehandlung unterzogen wird, die ausgewählt ist aus der Gruppe bestehend aus: mechanisches Glätten der Oberfläche, gezieltes lokales Erwärmen, Erwärmen des gesamten Gegenstands, gezieltes lokales Abkühlen, Abkühlen des gesamten Gegenstands, Kontaktieren des Gegenstands mit Wasserdampf, Kontaktieren des Gegenstands mit dem Dampf eines organischen Lösungsmittels, Bestrahlen des Gegenstands mit elektromagnetischer Strahlung, Immersion des Gegenstands in ein Flüssigkeitsbad oder einer Kombination aus mindestens zwei hiervon.

10. Verfahren gemäß einem der vorhergehenden Ansprüche, **dadurch gekennzeichnet, dass** die Partikel nach dem Schritt des Auftragens einer Schicht der Partikel auf die Zielfläche wenigstens teilweise in einer flüssigen Phase suspendiert sind.

11. Gegenstand, hergestellt durch ein Verfahren gemäß einem der vorhergehenden Ansprüche.

12. Gegenstand gemäß Anspruch 11, **dadurch gekennzeichnet, dass** im Gegenstand vorliegendes gesintertes thermoplastisches Polyurethan eine Phasenseparation in Hartphasen und Weichphasen aufweist und der Anteil der Weichphasen, bestimmt mittels Rasterkraftmikroskopie, ≥ 40% der Summe aus Hartphasen und Weichphasen ausmacht.

13. Gegenstand gemäß Anspruch 11 oder 12, **dadurch gekennzeichnet, dass** im Gegenstand vorliegendes gesintertes thermoplastisches Polyurethan einen tan delta-Wert (dynamisch-mechanische Analyse gemäß ISO 6721-4) aufweist, welcher im Temperaturbereich zwischen 0 °C und 100 °C um ≤ 0,2 schwankt.

14. Partikelförmiges Mittel enthaltend thermoplastisches Polyurethan, wobei das thermoplastische Polyurethan erhältlich ist aus der Reaktion der Komponenten
a) mindestens ein organisches Diisocyanat,
b) mindestens eine mit gegenüber Isocyanatgruppen reaktiven Gruppen aufweisenden Verbindung mit einem zahlenmittleren Molekulargewicht (Mn) von 500 g/mol bis 6000 g/mol und einer zahlenmittleren Funktionalität der Gesamtheit der Komponenten unter b) von 1,8 bis 2,5,
c) mindestens ein Kettenverlängerungsmittel mit einem Molekulargewicht (Mn) von 60 bis 450 g/mol und einer zahlenmittleren Funktionalität der Gesamtheit der Kettenverlängerungsmittel unter c) von 1,8 bis 2,5,
in Gegenwart von
d) gegebenenfalls Katalysatoren,
e) gegebenenfalls Hilfs- und/oder Zusatzmitteln,
f) gegebenenfalls einen oder mehrere Kettenabbrecher,
wobei das thermoplastische Polyurethan eine Fließtemperatur (Kreuzungspunkt von E' und E" in der DMA) von ≥ 80 °C bis ≤ 180 °C und eine Shore A-Härte gemäß DIN ISO 7619-1 von ≥ 50 Shore A und ≤ 85 Shore A aufweist und welches bei einer Temperatur T eine Schmelzvolumenrate (melt volume rate (MVR)) gemäß ISO 1133 von ≥ 5 bis ≤ 15 cm³/10 min und eine Änderung des MVR bei einer Erhöhung dieser Temperatur T um 20 °C von ≥ 90 cm³/10 min aufweist,
zur Herstellung von Gegenständen in pulverbasierten additiven Fertigungsverfahren, insbesondere dem Verfahren gemäß einem der Ansprüche 1 bis 10.

15. Das partikelförmige Mittel nach Anspruch 14, wobei mindestens 90 Gew.-% der Partikel einen Teilchendurchmesser von kleiner 0,25 mm aufweist und das Mittel bevorzugt 0,02 bis 0,5 Gew.-%, bezogen auf die Gesamtmenge an Mittel, Fließmittel enthält.

## Claims

1. Method of producing an article, comprising the steps of:
- applying a layer of particles to a target surface;
- introducing energy into a selected portion of the layer corresponding to a cross section of the article in a chamber to bond the particles in the selected portion;
- repeating the steps of applying and introducing energy for a multitude of layers to bond the bonded portions of the adjacent layers in order to form the article;
where at least some of the particles include a fusible polymer;
**characterized in that**
the fusible polymer comprises a thermoplastic polyurethane polymer having
a flow temperature (point of intersection of E' and E" in DMA) of ≥ 80°C and ≤ 180°C and
a Shore A hardness to DIN ISO 7619-1 of ≥ 50 Shore A and ≤ 85 Shore A and
a melt volume flow rate (MVR) at a temperature T to ISO 1133 of ≥ 5 to ≤ 15 cm³/10 min and
a change in the MVR in the event of an increase of this temperature T by 20°C of ≥ 90 cm³/10 min.

2. Method according to Claim 1, **characterized in that** the introducing of energy into a selected portion of the layer corresponding to a cross section of the article to bond the particles in the selected portion comprises the following step:
- irradiating a selected portion of the layer corresponding to a cross section of the article with an energy beam to bond the particles in the selected portion.

3. Method according to Claim 1, **characterized in that** the introducing of energy into a selected portion of the layer corresponding to a cross section of the article to bond the particles in the selected portion comprises the following steps:
- applying a liquid to a selected portion of the layer corresponding to a cross section of the article, where said liquid increases the absorption of energy in the regions of the layer with which it comes into contact relative to the regions with which it does not come into contact;
- irradiating the layer so that the particles in regions of the layer contacted with the liquid are bonded to one another and the particles in regions of the layer not contacted by the liquid are not bonded to one another.

4. Method according to any of the preceding claims, **characterized in that** the particles applied are at least intermittently heated or cooled.

5. Method according to any of the preceding claims, **characterized in that** the thermoplastic polyurethane polymer has a glass transition temperature of ≤ 0°C (maximum of E" in DMA).

6. Method according to any of the preceding claims, **characterized in that** the storage modulus E' in the thermoplastic polyurethane polymer, determined by means of dynamic-mechanical analysis in a tensile test at 1 Hz and 2°C/min at 80°C is ≥ 30% of the storage modulus E' at 0°C.

7. Method according to any of the preceding claims, **characterized in that** the thermoplastic polyurethane polymer has the following properties:
- the glass transition temperature (maximum of E" in DMA) is ≤ 0°C;
- the polymer has a maximum in the loss modulus E" (DMA) at a temperature T_{E", max};
- the polymer has a first storage modulus E'₁ (DMA) at a temperature T₁ = T_{E", max} - 10°C;
- the polymer has a second storage modulus E'₂ (DMA) at a temperature T₂ = T₁ + 50°C;
- E'₂ is ≥ 0.3% to ≤ 2% of E'₁.

8. Method according to any of the preceding claims, **characterized in that** at least some of the particles include the fusible polymer and a further polymer and/or inorganic particles.

9. Method according to any of the preceding claims, **characterized in that** the article formed is subjected to an aftertreatment selected from the group consisting of: mechanical smoothing of the surface, controlled local heating, heating of the entire article, controlled local cooling, cooling of the entire article, contacting of the article with steam, contacting of the article with the vapour of an organic solvent, irradiating the article with electromagnetic radiation, immersing the article into a liquid bath, or a combination of at least two of these.

10. Method according to any of the preceding claims, **characterized in that** the particles, after the step of applying a layer of particles to the target surface, are at least partly suspended in a liquid phase.

11. Article produced by a method according to any of the preceding claims.

12. Article according to Claim 11, **characterized in that** sintered thermoplastic polyurethane present in the article has a phase separation into hard and soft phases, and the proportion of the soft phases, determined by means of scanning force microscopy, accounts for ≥ 40% of the sum total of hard phases and soft phases.

13. Article according to Claim 11 or 12, **characterized in that** sintered thermoplastic polyurethane present in the article has a tan delta value (dynamic mechanical analysis according to ISO 6721-4) that varies by ≤ 0.2 in the temperature range between 0°C and 100°C.

14. Particulate composition comprising thermoplastic polyurethane, wherein the thermoplastic polyurethane is obtainable from the reaction of the following components:
a) at least one organic diisocyanate,
b) at least one compound having groups reactive toward isocyanate groups and having a number-average molecular weight (Mn) of 500 g/mol to 6000 g/mol and a number-average functionality of the sum total of the components b) of 1.8 to 2.5,
c) at least one chain extender having a molecular weight (Mn) of 60 to 450 g/mol and a number-average functionality of the sum total of the chain extenders c) of 1.8 to 2.5,
in the presence of
d) optionally catalysts,
e) optionally auxiliaries and/or additives,
f) optionally one or more chain terminators,
wherein the thermoplastic polyurethane has a flow temperature (point of intersection of E' and E" in DMA) of ≥ 80°C to ≤ 180°C and a Shore A hardness to DIN ISO 7619-1 of ≥ 50 Shore A and ≤ 85 Shore A and has a melt volume flow rate (MVR) at a temperature T to ISO 1133 of ≥ 5 to ≤ 15 cm³/10 min and a change in the MVR in the event of an increase of this temperature T by 20°C of ≥ 90 cm³/10 min,
for production of articles in powder-based additive manufacturing methods, especially the method according to any of Claims 1 to 10.

15. Particulate composition according to Claim 14, wherein at least 90% by weight of the particles have a particle diameter of less than 0.25 mm, and the composition preferably contains 0.02% to 0.5% by weight, based on the total amount of composition, of flow agent.

## Revendications

1. Procédé de fabrication d'un objet, comprenant les étapes :
- application d'une couche de particules sur une surface cible ;
- action d'une énergie sur une partie sélectionnée de la couche, correspondant à une section transversale de l'objet, dans une chambre, de façon que les particules s'assemblent dans la partie sélectionnée ;
- répétition des étapes d'application et d'action d'une énergie pour un grand nombre de couches, de façon que les parties assemblées des couches voisines s'assemblent, pour former l'objet ;
dans lequel au moins une partie des particules comprend un polymère fusible ;
**caractérisé en ce que**
le polymère fusible comprend un polymère polyuréthane thermoplastique, qui présente
une température de fluidité (point d'intersection de E' et de E" dans l'AMD) ≥80 °C à ≤180 °C et
une dureté Shore A selon DIN ISO 7619-1 ≥50 Shore A et ≤85 Shore A, et qui présente
à une température T un indice de fluidité en volume (melt volume rate) (MVR) selon ISO 1133 ≥5 à ≤15 cm³/10 min et
une variation du MVR, pour une élévation de température T de 20 °C, ≥90 cm³/10 min.

2. Procédé selon la revendication 1, **caractérisé en ce que** l'action d'une énergie sur une partie sélectionnée de la couche, correspondant à une section transversale de la couche, de façon que les particules dans la partie sélectionnée s'assemblent, comprend les étapes suivantes :
- irradiation d'une partie sélectionnée de la couche, correspondant à une section transversale de l'objet, avec un faisceau d'énergie, de façon que les particules s'assemblent dans la partie sélectionnée.

3. Procédé selon la revendication 1, **caractérisé en ce que** l'action d'une énergie sur une partie sélectionnée de la couche, correspondant à une section transversale de l'objet, de façon que les particules s'assemblent dans la partie sélectionnée, comprend les étapes suivantes :
- application d'un liquide sur une partie sélectionnée de la couche, correspondant à une section transversale de l'objet, le liquide augmentant l'absorption d'énergie dans les zones de la couche en contact avec lui, par rapport aux zones qui ne sont pas en contact avec lui ;
- irradiation de la couche, de façon que les particules s'assemblent dans les zones de la couche en contact avec le fluide, et que les particules ne s'assemblent pas les unes aux autres dans les zones de la couche qui ne sont pas en contact avec le liquide.

4. Procédé selon l'une des revendications précédentes, **caractérisé en ce que** les particules appliquées sont au moins partiellement chauffées ou refroidies.

5. Procédé selon l'une des revendications précédentes, **caractérisé en ce que** le polymère polyuréthane thermoplastique présente une température de transition vitreuse ≤0 °C (maximum de E" dans l'AMD).

6. Procédé selon l'une des revendications précédentes, **caractérisé en ce que**, dans le polymère polyuréthane thermoplastique, le module de conservation E', déterminé par analyse mécanique dynamique est, dans l'essai de traction à 1 Hz et à 2 °C/min, de 80 °C ≥30 % du module de conservation E' à 0 °C.

7. Procédé selon l'une des revendications précédentes, **caractérisé en ce que** le polymère polyuréthane thermoplastique présente les propriétés suivantes :
- la température de transition vitreuse (maximum de E" dans l'AMD) est ≤0 °C ;
- à une température T_{E",max}, le polymère présente un maximum du module de pertes E" (AMD) ;
- à une température T₁ = T_{E",max} - 10 °C, le polymère présente un premier module de conservation E'₁ (AMD) ;
- à une température T₂ = T₁ + 50 °C, le polymère présente un second module de conservation E'₂ (AMD) ;
- E'₂ est ≥0,3 % jusqu'à ≤2 % de E'₁.

8. Procédé selon l'une des revendications précédentes, **caractérisé en ce qu'**au moins une partie des particules comprend le polymère fusible ainsi qu'un autre polymère et/ou des particules inorganiques.

9. Procédé selon l'une des revendications précédentes, **caractérisé en ce que** l'objet formé est soumis à un post-traitement, qui est choisi dans le groupe consistant en : un lissage mécanique de la surface, un chauffage local ciblé, un chauffage de la totalité de l'objet, un refroidissement local ciblé, un refroidissement de la totalité de l'objet, une mise en contact de l'objet avec de la vapeur d'eau, une mise en contact de l'objet avec la vapeur d'un solvant organique, une irradiation de l'objet avec un rayonnement électromagnétique, une immersion de l'objet dans un bain de liquide ou une combinaison d'au moins deux de ces post-traitements.

10. Procédé selon l'une des revendications précédentes, **caractérisé en ce que** les particules, après l'étape d'application d'une couche des particules sur la surface cible, sont au moins partiellement mises en suspension dans une phase liquide.

11. Objet fabriqué par un procédé selon l'une des revendications précédentes.

12. Objet selon la revendication 11, **caractérisé en ce que** le polyuréthane thermoplastique fritté présent dans l'objet présente une séparation des phases en des phases rigides et des phases souples, et la proportion des phases souples, déterminée par microscopie à force atomique, est ≥40 % de la somme des phases rigides et des phases souples.

13. Objet selon la revendication 11 ou 12, **caractérisé en ce que** le polyuréthane thermoplastique fritté présent dans l'objet présente une valeur delta (analyse mécanique dynamique selon ISO 6721-4), qui fluctue d'une valeur ≤0,2 dans la plage de températures entre 0 °C et 100 °C.

14. Produit particulaire contenant un polyuréthane thermoplastique, le polyuréthane thermoplastique pouvant être obtenu par la réaction des composants
a) au moins un diisocyanate organique,
b) au moins un composé présentant des groupes réactifs vis-à-vis des groupes isocyanate, ayant une masse moléculaire moyenne en nombre (Mn) de 500 g/mol jusqu'à 6 000 g/mol et une fonctionnalité moyenne en nombre de la totalité des composants de b) de 1,8 à 2,5,
c) au moins un agent d'extension de chaîne ayant une masse moléculaire (Mn) de 60 à 450 g/mol et une fonctionnalité moyenne en nombre de la totalité des agents d'extension de chaîne de c) de 1,8 à 2,5,
en présence
d) éventuellement de catalyseurs,
e) éventuellement d'adjuvants et/ou d'additifs,
f) éventuellement d'un ou plusieurs rupteurs de chaîne,
le polyuréthane thermoplastique présentant une température de fluidité (point d'intersection de E' et de E" dans l'AMD) ≥80 °C jusqu'à ≤180 °C et une dureté Shore A selon DIN ISO 7619-1 ≥50 Shore A et ≤85 Shore A, et qui présente, à une température T, un indice de fluidité en volume (melt volume rate (MVR)) selon ISO 1133 ≥5 jusqu'à ≤15 cm³/10 min et une variation du MVR pour une élévation de la température T de 20 °C, ≥90 cm³/10 min,
pour fabriquer des objets par le procédé de fabrication additive à base de poudres, en particulier par le procédé selon l'une des revendications 1 à 10.

15. Produit particulaire selon la revendication 14, dans lequel au moins 90 % en poids des particules présentent une granulométrie inférieure à 0,25 mm, le produit contenant de préférence 0,02 à 0,5 % en poids, par rapport à la quantité totale du produit, d'agents de fluidité.
